# EUROPEAN PATENT APPLICATION

(11) **EP 2 266 400 A1**
(43) Date of publication of application: **29.12.2010**
(21) Application number: 09305544.0
(22) Date of filing: 15.06.2009
(51) Int. Cl.: A01N 43/40, A01N 43/86, A01N 47/40, A01N 51/00, A01P 7/00, A01N 25/02

(54) **NMP-free formulations of neonicotinoids**

(71) Applicant: NUFARM, 92233 Gennevelliers (FR)
(72) Inventor: Gasse, Jean-Jacques, 27600 Saint-Aubin-Sur-Gaillon (FR); Duchamp, Guillaume, 92230 Gennevilliers (FR); Cantero, Maria, 92230 Gennevilliers (FR)
(74) Representative: Cabinet Plasseraud

(57) **Abstract**

The invention relates to NMP-free liquid formulation comprising at least one nicotinoid and at least one aprotic polar component selected from the group comprising the compounds of formula I, II or III below, and mixtures thereof, 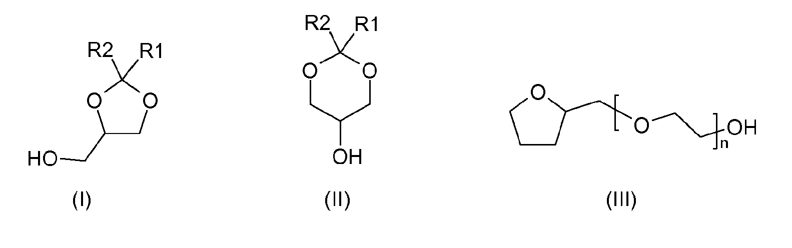 wherein R1 and R2 independently represent H or an alkyl group having less than 5 carbons, preferably a methyl group, and n represents an integer ranging from 0 to 5, and to their applications.

## Description

### Technical Field of the invention

The invention relates to novel liquid formulations of neonicotinoids and to their use for treating plants, for protecting plants from pests and/or for controlling pests infestation.

### Background of the Invention:

Liquid agrochemical formulations of neonicotinoids are well-known, and provide a crop protection agent in the form of water-soluble concentrate (SL for soluble liquid). These SL formulations comprise emulsifiers, dispersants, solvents alone or in a mixture with a co-solvent. N-methylpyrrolidone (NMP) is often used as co-solvent in those SL formulations.

The EU classification of NMP has recently been reexamined by the 31^{st} committee on the Adaptation to Technical Progress (31^{ST} ATP) of the EU directives for the elimination of technical barriers to trade with dangerous substances and preparations and, in accordance with EU directive 2009/2/EC dated 15 January 2009, NMP is now classified as toxic (T classification) and reprotoxic of category 2 with the Risk-Phrasal R61. It is therefore a significant and urgent aim to replace NMP by a safer solvent without negatively influencing the biological efficacy of the neonicotinoids and the physical and chemical stabilities of SL formulations containing them.

EP 1695621 teaches that propylene carbonate (CAS No. 108-32-7) may advantageously substitute NMP in the SL formulation of neonicotinoids. However, even if the substitution of NMP by propylene carbonate is a significant improvement, propylene carbonate is itself classified as an (Xi) irritating solvent and consequently, commercial products containing it can be classified products.

EP 1926373 disclosed SL-formulations of neocotinoids comprising an ethoxylated fatty alcohol in a solvent selected from dimethylsulfoxide (DMSO), NMP and Gamma-butyrolactone (GBL) to control eggs and whitefly nymphs. However said patent is mute on the toxicity of the solvents and in particular of NMP and there is no example of NMP-free formulations. Furthermore, gamma-Butyrolactone is classified as a pro-drug in some countries (CANADA) as it is easily metabolized in humans into gamma-hydroxy-butyric acid (GHB) which is a psychotropic drug.

EP 2 014 163 teaches to use dipropylene glycol with either gamma-butyrolactone or propylene carbonate instead of NMP, to control the uniformity and the color fading of acetamiprid formulation comprising a dye. In this patent application liquid formulations comprising a solvent having a carbonyl or a sulfonyl groups selected from the group of lactones, sulfoxides, cyclic ketones and cyclic carbonate esters with a co-solvent selected from non-cyclic alcohols, alkylene glycols, polyakylene glycols, triols, glycol monoacetate and glycol monalkyl ether are claimed.

### Summary of the invention:

Surprisingly and unexpectedly it has been found that glycofurol, glycerolformal, solketal and derivatives thereof can be used alone or in mixtures with Dimethylsulfoxide (DMSO) to prepare stable and biologically efficient SL formulations of neonictonoids which are moreover safe and non-classified at all. Accordingly, the invention relates to a NMP-free liquid formulation comprising at least one nicotinoid and at least one aprotic polar component selected from the group comprising the compounds of formula I, II or III below, and mixtures thereof, 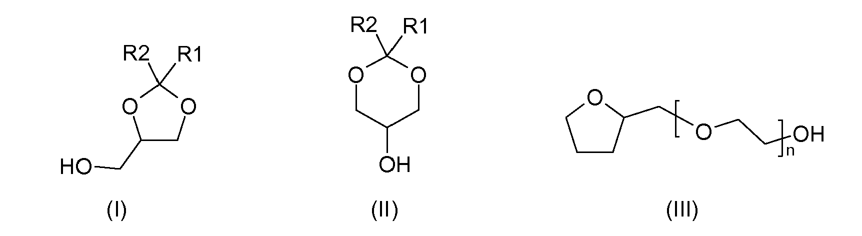 wherein R1 and R2 independently represent H or an alkyl group having less than 5 carbons and n represents an integer ranging from 0 to 5. Said formulations can be SL formulations.

By "alkyl group having less than 5 carbons", it is understood an alkyl selected from the group consisting of methyl, ethyl, propyl, isopropyl, n-butyl, isobutyl, sec-butyl, tert-butyl, n-pentyl, methyl-1-butyl, methyl-2-butyl, methyl-3-butyl, 1,1-dimethyl-propyl, 1,2-dimethylpropyl,2,2-dimethylpropyl and (1-ethyl)-ethyl. Preferably, said alkyl group is a methyl group.

Compounds of formula (I), (II) and (III) are safe, the formulations according to the invention are completely free of NMP and thus provide an improvement with respect to human health and operators exposures from the manufacture of those formulations to their applications onto the crops.

Consequently, the invention provides NMP-free SL liquid formulations of neonicotinoids which are not-classified.

The neonicotinoid is selected from the group comprising acetamiprid, clothianidin, dinotefuran, flonicamid, imidacloprid, nitenpyram, nithiazine, thiacloprid, thiamethoxam and mixtures thereof.

Preferably, the neonicotinoid is selected from the group comprising acetamiprid, clothianidin, dinotefuran, imidacloprid, nitenpyram, thiacloprid, thiamethoxam and mixtures thereof.

Even more preferably, the neonicotinoid is selected from the group comprising acetamiprid, imidacloprid and mixtures thereof.

In a specific embodiment of the invention the aprotic polar component is solketal of Formula I wherein R1=R2=CH₃:

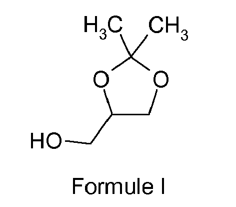

Solketal is also known as isopropylidene glycerol or 4-hydroxymethyl-2,2'-dimethyl-1,3-dioxolane.

In another specific embodiment of the invention the aprotic polar component is 1,2-glycerol-formal also known as 4-hydroxy-methyl-1,3-dioxolane of the Formula I wherein R1=R2=H

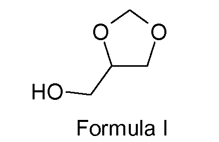

In another embodiment of the invention the aprotic polar component is 1,3-glycerol-formal also known as 4-hydroxy-1,3-dioxane of the Formula II wherein R1=R2=H

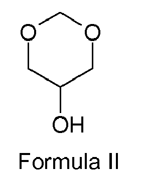

In a preferred embodiment of the invention the aprotic polar component is a mixture in any ratio of 1,2-and 1,3-glycerol formal, more particularly technical Glycerol formals which are mixtures of 1,2- and 1,3-glycerol formal which range from 50 to 60 % of 5-hydroxy-1,3-dioxane and from 40 to 50 % of 4-hydroxymethyl-1,3-dioxolane. Said products are commercially available from numerous companies. Technical Glycerol formals are non-classified, limpid, clear and odorless liquids which are under most conditions stable and non-corrosive, those mixtures are highly safe and used as vehicle for pharmaceutical drugs applied by injection in human body.

In another preferred embodiment of the invention the aprotic polar component is tetraglycol (CAS 52814-38-7) also known as 2-[2-(tetrahydrofurfuryloxy)-ethoxy]ethanol which has the formula III, in which n=2:

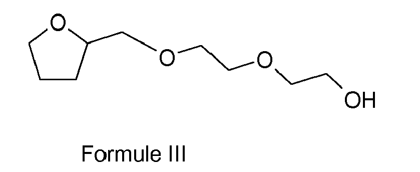

In another preferred embodiment of the invention the aprotic polar component is glycofurol (GAS 31692-85-0) which is a commercially available mixture of n-ethoxylated furfuryl alcohols of formula III wherein n ranges from 0 to 5 in ratios ranging from less than 3% for THFA (tetrahydrofurfuryl alcohol, n=0), from 20 to 30% of mono-ethoxylated THFA (n=1), from 27 to 37% of di-ethoxylated THFA (n=2), from 20 to 30% of tri-ethoxylated THFA (n=3), from 7 to 17% of tetra-ethoxylated THFA (n=4) and less than 4 % of penta-ethoxylated THFA (n=5). Glycofurol is a non-classified clear colourless liquid, soluble in most organic solvents, completely miscible in water, which is used for intravenous injectable preparations.

The NMP-free formulations according to the invention further comprise a solvent. Said solvent is not NMP.

Suitable solvents of the invention can be all solvents commonly used in SL formulations particularly non-classified, water-miscible, aprotic, polar solvents such as dimethyl sulfoxide (DMSO) and dimethyl sulfone (DMSO₂) which have very good solvent properties. DMSO is of particular interest and preferred for the formulations according to the invention.

According to another embodiment, the formulations according to the invention also comprise DMSO as solvent.

Advantageously, the NMP-free formulations according to the invention comprise the neocotinoid, DMSO and an aprotic polar component selected from the group comprising glycerol formal, glycofurol, solketal and mixtures thereof.

The compositions of the invention are particularly suitable for insecticidal formulations, and more particularly for insecticidal formulations comprising at least one neonicotinoid. It will be understood that further insecticides, acaricides or insecticide synergists can be added in the formulations of the invention.

The NMP-free SL formulations according to the invention may comprise additional agents known by those skilled in the art such as dispersing agents, emulsifiers and when required wetting agents, defoamers and preservatives.

The insecticides and neonicotinoid insecticides particularly useful according to the invention are:
- Acetamiprid (CAS 135410-20-7),(E)-N-[(6-chloro-3-pyridinyl)methyl]-N'-cyano-N-methylethanimidamide which has the structural formula: 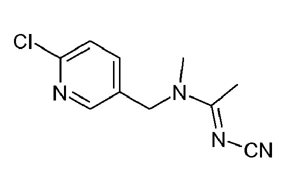
- Clothianidin (CAS 210880-92-5),(E)-N-[(2-chloro-5-thiazolyl)methyl]-N'-methyl-N"-nitroguanidine which has the structural formula: 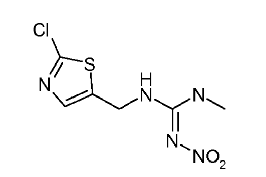
- Dinotefuran (CAS 165252-70-0),N-methyl-N'-nitro-N"-[(tetrahydro-3-furanyl)methyl]-guanidine which has the structural formula: 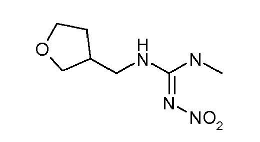
- Flonicamid (CAS 15062-67-0),N-(cyanomethyl)-4-(trifluoromethyl)-3-pyridinecarboxamide which has the structural formula: 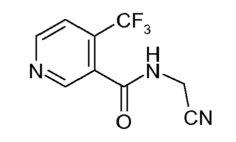
- Imidacloprid (CAS 138261-41-3),(2E)-1-[(6-chloro-3-pyridinyl)methyl]-N-nitro-2-imidazolidinimine which has the structural formula: 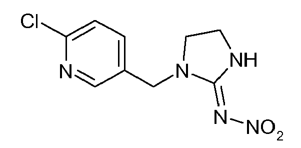
- Nitenpyram (CAS 150824-47-8),(1E)-N-[(6-chloro-3-pyridinyl)methyl]-*N*-ethyl-*N'*-methyl-2-nitro-1,1-ethenediamine which has the structural formula: 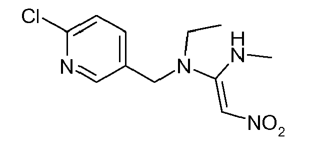
- Nithiazine (CAS 58842-20-9), tetrahydro-2-(nitromethylene)-2H-1,3-thiazine which has the structural formula: 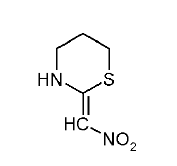
- Thiacloprid (CAS 111988-49-9), (*Z*)-[3-[(6-chloro-3-pyridinyl)methyl]-2-thiazolidinylidene]cyanamide which has the structural formula: 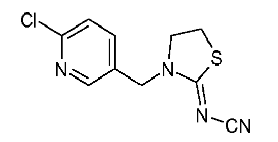
- Thiamethoxam (CAS 153719-23-4), 3-[(2-chloro-5-thiazolyl)methyl]tetrahydro-5-methyl-N-nitro-4H-1,3,5-oxadiazin-4-imine which has the structural formula:

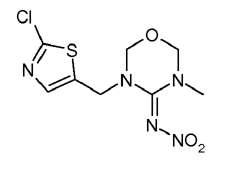

Additional partners of the neonicotinoids are preferably insecticides and acaricides.

Suitable insecticides which may be mentionned are:
The pyrethroid insecticides such as acrinathrin, allethrin, bioallethrin, barthrin, bifenthrin, bioethanomethrin, cyclethrin, gamma and lamda cycloprothrin; alpha, beta, theta, and zeta cypermethrin; cyphenothrin, deltamethrin, dimefluthrin, dimethrin, empenthrin, fenfluthrin, fenpirithrin, fenpropathrin, fenvalerate,esfenvalerate, flucythrinate, fluvalinate, tau-fluvalinate, furethrin, imiprothrin, metofluthrin, permethrin, biopermethrin, transpermethrin, phenothrin, pralletherin, profluthrin, pyresmethrin, resmethrin, bioresmethrin, cisresmethrin, tefluthrin, teraallethrin, tetramethrin, tralomethrin, transfluthrin, etofenprox, flufenprox, halfenprox, protrifenbute and silafluofen.
The pyrazole insecticides such as chlorantraniliprole, cyantraniliprode, tebufenpyrad, tolfenpyrad, acetoprole, ethiprole, fipronil, pyraclofos, pyrafluprole, pyriprole and vaniliprole.
The antibiotic insecticides such as allosamidin, thuringiensin, abamectin, doramectin, emamectin, eprinomectin, ivermectin, selamectin, lepimectin, milbemectin, milbemectin oxime, moxidectin, spinetoram and spinosad.
The organochlorine insecticides such as camphechlor, gamma-HCH, lindane, methoxychlor, aldrin, chlordane, chlordecone, dieldrin, dilor, endosulphan, alpha-endosulfan, endrin, isobenzan, isodrin, kelevan and mirex.
The carbamate insecticides such as bendiocarb, carbaryl, benfuracarb, carbofuran, carbosulfan, decarbosulfuran, furathiocarb, dimetan, dimetilan, hyquincarb, pirimcarb, alanycarb, aldicarb, aldoxycarb, butocarboxim, butoxycarboxim, methomyl, nitriacarb, oxamyl, tazimcarb, thiocarboxime, thiodicarb, thiofanox, allyxycarb, aminocarb, bufencarb, butacarb, carbanolate, cloethocarb, dicresyl, dioxacarb, EMPC, ethiofencarb, fenethacrab, fenobucarb, isoprocarb, methiocarb, metlocarb, mexacarbate, promacyl, promecarb, propoxur, trimethacarb, XMC and xylylcarb.
The organophosphorus insecticides such as bromfenvinphos, chlorfenvinphos, crotoxyphos, dichlorvos, dicrotophos, dimethylvinphos, fospirate, heptenophos, methocrotophos, mevinphos, monocrotophos, naled, naftalofos, phosphamidon, propaphos, TEPP, tetravinphos, dioxabenzofos, fosmethilan, phenthoate, acethion, amiton, cadusafos, chlorethoxyfos, chlormephos, demephion, demephion-O, demephion-S, demeton-methyl, demeton-O-methyl, demeton-S-methyl, demeton-S-methylsulphon, disulfoton, ethion, ethoprophos, IPSP, isothioate, malathion, methacrifos, oxydemeton-methyl, oxydeprofos, oxydisulfoton, phorate, sulfotep, terbufos, thiometon, amidithion, cyanthoate, dimethoate, ethoate-methyl, formothion, mecarbam, omethoate, prothoate, sophamide, vamidothion, chlorphoxim, phoxim, phoxim-methyl, azamethiophos, coumaphos, coumithoate, dioxathion, endothion, menazon, morphothion, phosalone, pyraclofos, pyridaphenthion, quinothion, dithicrofos, thicrofos, azinphos-ethyl, azinphos-methyl, dialifos, phosmet, isoxathion, zolaprofos, chlorprazophos, pyrazophos, chlorpyrifos, chlorpyrifos-methyl, butathiofos, diazinon, etrimfos, lirimfos, pirimiphos-ethyl, pirimiphos-methyl, pirimidophos, pyrimitate, tebupirimfos, quinalphos, quinalphos-methyl, athidathion, lythidathion, methidathion, prothidathion, isaphos, triazophos, azothoate, bromophos, bromophos-ethyl, carbophenothion, chlorthiophos, cyanophos, cythioate, dicapthon, dichlofenthion, etaphos, famphur, fenchlorphos, fenitrothion, fensulfothion, fenthion, fenthion-ethyl, heterophos, jodfenphos, mesulfenfos, parathion, parathion-methyl, phenkapton, phosnichlor, profenofos, prothiofos, sulprofos, temephos, trichlormetaphos-3, trifenofos, butonate, trichlorfon, mecarphon, fonos, trichlornat, cyanofenphos, EPN, leptophos, crufomate, fenamiphos, fosthietan, mephosfolan, phosfolan, pirimetaphos, acephate, isocarbophos, isofenphos, isofenfos-methyl, methamidophos, propetamphos, dimefox, mazifox, mipafox and schradan.
The chitin synthesis inhibitors such as bistrifluron, buprofezin, chlorfluazuron, cyromazine, diflubenzuron, flucycloxuron, flufenoxuron, hexaflumuron, lufenuron, novaluron, noviflumuron, penfluron, teflubenzuron and triflumuron.
The unclassified insecticides such as closantel, crotamiton, fenozaflor, fenoxacrim, hydramethylnon, isoprothiolane, malonoben, metaflumizone, nifluridide, plifenate, pyridalyl, pyrifluquinazon, rafoxanide, sulfoxaflor, triarathene and triazamate.
And the insecticides flufenerim, pyrimidifen, chlofenapyr, spirotetramat, spiromesifen indoxacarb, metoxadiazone, bensultap, cartap, thiocyclam, thiosultap, amitraz, chlordimeform, formetanate, formparanate, flubendiamide.

Suitable acaricides which may be mentionned are:
The antibiotic acaricides such as nikkomycins, thuringiensin, tetranactin, abamectin, doramectin, eprinomectin, ivermectin, selamectin, milbemectin, milbemycin oxime and moxidectin.
The bridged diphenyl acaricides such as azobenzene, benzoximate, benzyl benzoate, bromopropylate, chlorbenside, chlofenethol, chlorfenson, chlorfensulphide, chlorobenzilate, chloropropylate, cyflumetofen, dicofol, diphenyl sulfone, fenson, fentrifanil, fluorbenside, proclonol, tetradifon and tetrasul.
The carbamate acaricides such as benomyl, carbanolate, carbaryl, carbofuran, methiocarb, metolcarb, promacyl, propoxur, aldicarb, butocarboxim, oxamyl, thiocarboxime and thiofanox.
The carbazate acaricides such as bifenazate.
The dinitrophenol acaricides such as binapacryl, dinex, dinobuton, dinocap, dinocton, dinopenton, dinosulfon, dinoterbon and DNOC (4,6-dinitro-O-Cresol).
The formamidine acaricides such as amitraz, chlordimeform, chloromebuform, formetanate and formparanate.
The mite growth regulators such as cyromazine, dofenapyn, fluazuron, flucycloxuron and flufenoxuron.
The organochlorine acaricides such as bromocyclen, camphechlor, dienochlor, endosulfan and lindane.
The organophosphorus acaricides such as chlorfenviphos, crotoxyphos, dichlorvos, heptenophos, mevinphos, monocrotophos, naled, TEPP, tetravinphos, amidithion, amiton, azinphos-ethyl, azinphos-methyl, azothoate, benoxafos, bromophos, bromophos-ethyl, carbophenothion, chlorpyrifos, chlorthiophos, coumaphos, cyanthoate, demeton, demeton-O, demeton-S, demeton-methyl, demeton-O-methyl, demeton-S-methyl, demeton-S-methylsulphon, dialifos, diazinon, dimethoate, dioxathion, disulfoton, endothion, ethion, ethoate-methyl, formothion, malathion, mecarbam, methacrifos, omethoate, oxydeprofos, oxydisulfoton, parathion, phenkapton, phorate, phosalone, phosmet, phoxim, primiphos-methyl, prothiadathion, prothoate, pyrimitate, quinalphos, quintiofos, sophamide, sulfotep, thiometon, triazophos, trifenofos, vamidothion, trichlorfon, isocarbophos, methamidophos, propetamphos, dimefox, mipafox and schradan.
The phenylsulfamide acaricides such as dichlofluanid
The pyrazole acaricides such as cyenopyrafen, fenpyroximate, tebufenpyrad, acetoprole, fipronil and vaniliprole.
The pyrethroid acaricides such as acrinathrin, bifenthrin, cyhalothrin, cypermethrin, alpha-cypermethrin, fenpropathrin, fenvalerate, flucythrinate, flumethrin, fluvalinate, tau-fluvalinate, permethrin and halfenprox.
The tetrazine acaricides such as clofentezine and diflovidazin.
The pyrimidamine acaricides such as pyrimidifen.
The pyrrole acaricides such as chlorfenapyr.
The quinoxaline acaricides such as chinomethionat and thioquinox.
The sulfite ester acaricides such as propargite.
The tetronic acid acaricides such as spirodiclofen.
The thiazolidine acaricides such as flubenzimine and hexythiazox.
The thiocarbamate acaricides such as fenothiocarb.
The thiourea acaricides such as chloromethiuron and diafenthiuron.
The unclassified acaricides such as acequinocyl, amidoflumet, closantel, crotamiton, cymiazole, disulfiram, etoxazole, fenazaflor, fenazaquin, fluacrypyrim, fluenetil, mesulfen, nifluride, pyridaben, sulfiram, sulfluramid, sulfur and triarathene .

Suitable dispersants are those which are customarily used in SL formulations. They may be anionic dispersants such as polycarboxylates, in particular polyacrylates, polymethacrylates and copolymers including polymaleates, phosphated or sulphated tristyryl phenol ethoxylates, vinyl acetate/vinylpyrrolidone copolymers such as Luviskol 64 or non-ionic dispersants such as polyethoxylated tristyryl phenol (Emulsogen or Soprophor TS54-), ethoxylated castor oil (alkamuls OR36), ethoxylated trisecbutylphenol (Sapogenat T180).

Suitable emulsifiers which may be mentioned are surfactants known as polyethoxylated tristyryl phenol (Emulsogen or Soprophor TS54-), ethoxylated castor oil (alkamuls OR36), ethoxylated trisecbutylphenol (Sapogenat T180), ethoxylated fatty acids, ethoxylated fatty esters, ethoxylated fatty alcohols, ethoxylated fatty amines, ethoxylated alkylphenols, ethoxylated alkylarylphenols, tetraalkylammonium halides, trialkylarylammonium halides, alkylamine sulphonates, alkylpolyglucosides.

Suitable wetting agents include nonionic and anionic surfactants such as alkylpolyglucosides, polyalkoxylated-fatty acid esters, polyalkoxylated fatty alcohol ethers, block copolymers, alkylaryl polyalkoxylated ethers, polyalkoxylated alkylphenols, polyalkoxylated alkylamines, fatty amines, fatty amides, N-methyl fatty acid taurates derivatives, organosilicone block copolymers, alpha-olefin sulphonates, alkyl diphenylether mono- and poly-sulphonates, mono- and poly-alkyl-aryl sulphonates, like dodecylbenzenesulphonates, polyalkylsulphosuccinates such as dioctyl-sulphosuccinate sodium, alkyl sulphates such as lauryl ether sulphates, phosphate esters and polyethoxylated sorbitan fatty esters.

As defoamers, suitable defoamers are EO/PO Copolymers alkyl ethers, polysiloxanes, mineral oil-based defoamers, natural oil-based defoamers , silicone oil-based defoamers.

According to a specific embodiment, the MP-free formulations according to the invention comprise:
- from 1 to 400 g/L, preferably from 5 to 380 g/L, and even still preferably from 10 to 350g/L of neonicotinoid crop protection agent alone or in combination with another pesticide;
- from 300 to 900 g/L, preferably from 450 to 900 g/L, and even still preferably from 600 to 900 g/L of a solvent, preferably dimethylsulfoxide (DMSO);
- from 50 to 450 g/L, preferably from 50 to 400 g/L, and even still preferably from 50 to 300 g/L of at least one aprotic polar component selected from the group comprising components of formula (I), (II) or (III) and mixtures thereof.

According to a specific embodiment, the NMP-free formulation comprises:
from 100 to 300 g/L of imidacloprid;
from 600 to 900 g/L of dimethylsulfoxide (DMSO); and
from 50 to 300 g/L of glycerolformal.

The formulation according to the invention further comprises:
- from 5 to 100 g/L, preferably from 5 to 75 g/L, and even still preferably from 5 to 50 g/L of dispersing agents;
- from 5 to 100 g/L preferably from 5 to 75 g/L, and even still preferably from 5 to 50 g/L of emulsifiers;
- from 0 to 50 g/L preferably from 0 to 25 g/L, and even still preferably from 0 to 10 g/L of wetting agents;
- from 0 to 10 g/L of preferably from 0 to 7.5 g/L, and even still preferably from 0 to 5 g/L defoamers.

The neonicotinoid SL formulations of the invention are commonly prepared in conventional equipment by mixing the liquid components of the formulation under stirring at ambient till a clear, homogeneous and limpid solution is obtained.

The SL formulations according to the invention are physically and chemically stable, according to the physicochemical properties and data required by the Annex III of the directive 91/414/EEC as amended by directive 94/37/EC.

Chemical stability: the contents of the active substances of the SL according to the invention after ageing at 54°C for 2 weeks and at ambient for 2 years are stable according to the requirements: no loss of content above 5%;

Physical stability : the appearance of the SL formulations of the invention, their pH, their relative density, their dilution stability in water and the stability of the packaging do not vary out of the acceptance of the guidelines after ageing at 54°C for 2 weeks, 1 week at 0°C and after storage for 2 years at ambient.

The SL formulations according to the invention are useful for combating pests and pests infestation in treating artichokes, asparagus, eggplants, beetroots, broccoli, brussel sprouts, cabbages, carrots, cauliflower, celeriac, zucchini, cucumbers, endives, fennels, green beans, lettuces, melons, onions, peas, potatoes, red cabbages, rhubarb, runner beans, spinach, tomatoes, white cabbages, chestnuts, citrus fruits, grapevines, pome fruits, stone fruits, cotton, barley, maize, oats, rye, wheat, beets, oilseed rape, sunflowers, soybeans, sugarcane, tobacco triticale and ornamental plants.

The rate of application of the SL formulations of the invention depends onto the pest infestation, the mode of application and on the crop to be treated. It can vary in a wide range as from 10 to 1000 g/ha i.e. 2 to 200 g of active neonicotinoid per ha.

The following examples will allow those skilled in the art to better understand the scope of the invention, are provided to illustrate the invention with references to preferred embodiments. Those skilled in the art will appreciate that obvious modifications and substitutions are contemplated to be within the scope of the invention as set forth, and particularly in the claims below:

### EXAMPLES

### Example 1: SL formulation of Imidacloprid

120 g of technical glycerol formal were mixed under stirring at room temperature with 600 g of dimethylsulfoxide until homogeneity, 10 g of Luviskol VA 64 (Vinylacetate/Vinylpyrrolidone copolymer 40/60) and 25 g of Soprophor TS54 (polyethoxylated -54EO-tristyrylphenol) were added, then 172 g of technical imidacloprid (99 % of active ingredient) were slowly added and dissolved at room temperature.

An additional amount of DMSO was then added in such amount (circa 73 g were required) to adjust the content of imidacloprid at 200 g of active matter per liter.

A clear limpid and physically and chemically stable according to the guidelines for the generation of data on the physical, chemical and technical properties of plant protection products SL formulation was thus prepared.

This commercial product does not require any classification, therefore any labeling with respect to the EU directive.

## Claims

1. A NMP-free liquid formulation comprising at least one neonicotinoid and at least one aprotic polar component selected from the group comprising the compounds of formula I, II or III below, and mixtures thereof, 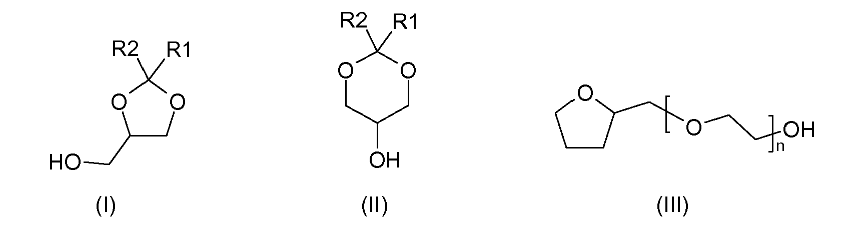 wherein R1 and R2 independently represent H or an alkyl group having less than 5 carbons, preferably a methyl group, and n represents an integer ranging from 0 to 5.

2. The NMP-free liquid formulation according to claim 1, wherein the neonicotinoid is selected from the group comprising acetamiprid, clothianidin, dinotefuran, flonicamid, imidacloprid, nitenpyram, nithiazine, thiacloprid and thiamethoxam, and mixtures thereof.

3. The NMP-free liquid formulation according to claim 2, wherein the neonicotinoid active is selected from the group comprising acetamiprid, clothianidin, dinotefuran, imidacloprid, nitenpyram, thiacloprid and thiamethoxam, and mixtures thereof.

4. The NMP-free liquid formulation according to claim 3, wherein the neonicotinoid active is selected from the group comprising acetamiprid, imidacloprid and mixtures thereof.

5. A NMP-free liquid formulation according to anyone of claims 1 to 4, wherein the aprotic polar component is solketal.

6. The NMP-free formulation according to anyone of claims 1 to 4, wherein the aprotic polar component is glycerol formal.

7. The NMP-free formulation according to anyone of claims 1 to 4, wherein the aprotic polar component is glycofurol.

8. The NMP-free formulation according to anyone of claims 1 to 7, wherein the aprotic polar component is a mixture of glycerol formal, glycofurol and soketal.

9. The NMP-free formulation according to anyone of claims 1 to 8, which further comprises DMSO.

10. The NMP-free formulation according to anyone of claims 1 to 9, wherein it comprises:
- from 1 to 400 g/L of at least one neonicotinoid alone or in combination with another pesticide;
- from 300 to 900 g/L of dimethylsulfoxide (DMSO); and
- from 50 to 450 g/L of at least one aprotic polar component selected from the group comprising solketal, glycerolformal, glycofurol and mixtures thereof.

11. The NMP-free formulation according to anyone of claims 1 to 10, wherein it comprises:
from 100 to 300 g/L of imidacloprid;
from 600 to 900 g/L of dimethylsulfoxide (DMSO); and
from 50 to 300 g/L of glycerolformal.

12. An agrochemical composition according to anyone of claims 1 to 11, which further comprises:
from 5 to 100 g/L of dispersing agents;
from 5 to 100 g/L of emulsifiers;
from 0 to 50 g/L of wetting agents; and
from 0 to 10 g/L of defoamers.

13. An agrochemical composition according to anyone of claims 1 to 12, which further comprises at least a second insecticide or an acaricide.

14. A method for treating plants, protecting plants from pests and controlling pests infestation comprising the application to plants by any mean of the NMP-free formulation according to anyone of claims 1 to 13.
